# EUROPEAN PATENT APPLICATION

(11) **EP 1 415 534 A1**
(43) Date of publication of application: **06.05.2004**
(21) Application number: 03394096.6
(22) Date of filing: 14.10.2003
(51) Int. Cl.: A01K 89/01

(54) **Rotor for a spinning reel**

(30) Priority: 30.10.2002 JP 2002316155
(71) Applicant: Shimano Inc., Osaka 590-8577 (JP)
(72) Inventor: Myojo, Seiji, Osaka 590-8577 (JP)
(74) Representative: Purdy, Hugh Barry

(57) **Abstract**

A rotor (3) of a spinning reel has a cylindrical portion (30), first and second rotor arms (31, 32) formed on opposite sides of the cylindrical portion, a bail arm (44) pivotably mounted to the front ends of the first and second rotor arms for guiding fishing line to the spool (4), and a mounting member (49) detachably installed on the outer peripheral side of the first rotor arm (31). The mounting member is detachably installed in a concave portion that is formed in the first rotor arm. A bail tripping device (48) is mounted within the mounting member. In this manner, a bail tripping device for a rotor of a spinning reel can be interchangeable regardless of the size of the rotor.

## Description

### BACKGROUND OF THE INVENTION

### Field of the Invention

This invention generally relates to a rotor for a spinning reel. More specifically, the present invention relates to a rotor for a spinning reel which is rotatively mounted to a reel unit and which guides and winds fishing line around a spool.

### Background Information

Spinning reels generally have a reel unit that is mounted to a fishing rod, a rotor rotatively mounted to the reel unit that serves to guide fishing line, and a spool onto which fishing line that has been guided by the rotor is wound. The rotor has a rotor unit, and a bail arm that is pivotally mounted to the rotor unit. The rotor unit has a cylindrical portion that is rotatively mounted to the reel unit, and first and second rotor arms that are disposed opposite one another and extend outward from the rear end portion of the cylindrical portion.

The bail arm guides the fishing line to the spool, and has a first bail support member pivotably mounted to the tip of the first rotor arm portion, a second bail support member pivotably mounted to the tip of the second rotor arm portion, a line roller rotatively mounted to the tip of the first bail support member, and a bail made of a piece of wire that links the line roller and the second bail support member. The first rotor arm is provided with a bail tripping device, which maintains the bail arm in the line-winding posture and the line-releasing posture and returns the bail arm from the line-releasing posture to the line-winding posture in response to the rotation of the rotor in the line-winding direction.

This conventional bail-tripping device has a toggle spring that is mounted to the rotor and whose tip is engaged with the bail arm near the pivot center of the bail arm, a moving member whose tip is engaged with the bail arm near the pivot center of the bail arm and whose base moves forward and backward with respect to the reel unit, and a switching projection provided on the reel unit such that the switching projection comes into contact with the moving member. The toggle spring toggles and urges the bail arm between two postures, and maintains the bail arm in the two postures. The toggle spring and the moving member are both accommodated in an internal space provided in the first rotor arm. Example of such structure is shown in Japanese patent application publication H10-4839.

In the aforementioned conventional structure, the toggle spring and the moving member of the bail tripping device are both accommodated in the internal space of the first bail arm. Because of this, it is difficult to attach an interchangeable bail tripping device, since the shape of the internal space in the first rotor arm will differ depending upon the size of the rotor used with a reel.

In view of the above, there exists a need for a rotor which overcomes the above mentioned problems in the prior art. This invention addresses this need in the prior art as well as other needs, which will become apparent to those skilled in the art from this disclosure.

### SUMMARY OF THE INVENTION

An object of the present invention is to make the bail tripping device in a rotor of a spinning reel that is interchangeable regardless of the size of the rotor.

A rotor of a spinning reel according to a first aspect of the present invention is a rotor of a spinning reel that has a reel unit and a spool. The rotor is rotatively mounted to the reel unit and guides fishing line around the spool. The rotor includes a rotor unit having a cylindrical portion that is rotatively mounted to the reel unit and a pair of rotor arms that each extend forward from opposing positions on an outer peripheral surface of a lower end portion of the cylindrical portion and are spaced apart from the cylindrical portion, a bail arm that is mounted to tips of the pair of rotor arms so as to be pivotable between a line-winding posture and a line-releasing posture, a mounting member that is detachably installed on one of the pair of rotor arms, and a bail tripping device of the spinning reel that is provided in the mounting member and which returns the bail arm to the line-winding posture from the line-releasing posture in response to the rotation of the rotor unit in the line-winding direction.

In this rotor, the mounting member is detachably installed on one the rotor arms, and the bail tripping mechanism is mounted on the mounting member. Here, by attaching the bail tripping device in advance on the mounting member and forming a bail tripping unit, a mounting member along with a bail tripping device that is attached to the mounting member as a unit can be installed on reels whose rotors are of different sizes.

A rotor according to a second aspect of the present invention is the rotor of the first aspect, in which the mounting member is arranged on the outer peripheral side of one of the pair of rotor arms.

In this situation, when the bail arm is, for example, mounted on an outer peripheral side of the rotor arm, the mounting member can be easily installed onto the rotor arm.

A rotor according to a third aspect of the present invention is the rotor of the first aspect, in which the mounting member is arranged on the inner peripheral side of one of the pair of rotor arms. In this situation, when the bail arm is, for example, mounted on an inner peripheral side of the rotor arms, the mounting member will be installed from the inner peripheral side of the bail arm. Thus, the design of the spinning reel will improve because it will be difficult for the mounting member to be exposed on the outer peripheral sides of the rotor arms.

The rotor according to a fourth aspect of the present invention is the rotor of any of the first to third aspects of the present invention, in which the cylindrical portion has a large diameter portion and a tubular portion that is detachably arranged on a front end portion of the large diameter portion. In this situation, the tubular portion can, for example, be formed from a material that is different from the material that forms the large diameter portion. In particular, when the mounting member is mounted on an inner peripheral side of the rotor arm, the mounting member is easily detached from the rotor arm by removing the tubular portion.

A rotor according to a fifth aspect of the present invention is the rotor of any of the first to fourth aspects of the invention, in which the bail tripping device has a moving member, a toggle spring mechanism, and a switching portion. The tip portion of the moving member is engaged with the bail arm. The base portion of the moving member is detachably engaged with the mounting member such that, in response to pivoting of the bail arm, the base portion of the moving member is moveable at least forward and backward between a first position which corresponds to the line-winding posture, and a second position which corresponds to the line-releasing posture and is closer to the reel unit than the first position. The toggle spring mechanism has a tip portion that is rotatively engaged with the bail arm at a position that is different from the position at which the moving member is engaged with the bail arm. The toggle spring mechanism toggles and biases the bail arm into both the line-winding posture and the line-releasing posture, and the direction in which the bail arm is biased changes in response to pivoting of the bail arm. The switching portion is arranged on a front portion of the reel unit. When the rotor arm rotates in the line-winding direction, the switching portion will come into contact with the base portion of the moving member that is in the second position to move the moving member toward the first position.

In this bail tripping device, when the bail arm flips from the line-winding posture to the line-releasing posture, the base portion of the moving member moves into the second position. As this occurs, the toggle spring mechanism is compressed up to the dead point for a period of time, and then elongates and urges the bail arm into the line-releasing posture. When disposed in the line-releasing posture, the bail arm is prevented from returning to the line-winding posture. As a result, when in the line-releasing posture, it will be difficult for the bail arm to flip back toward the line-winding posture even during casting. In this state, when the rotor rotates in the line-winding direction, the base portion of the moving member in the second position will come into contact with the switching portion, which presses the moving member toward the first position and presses the bail arm into the line-winding posture. Then, when the toggle spring mechanism exceeds the dead point, the toggle spring mechanism elongates and presses the bail arm into the line-winding posture, and the bail arm is pressed by the switching portion until the moving member reaches the projecting end. As a result, the bail arm is no longer restrained, and is tripped into and maintained in the line-releasing posture. Here, the bail arm can be flipped by a simple structure.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a left side cross-sectional view of a spinning reel according to one embodiment of the present invention;
Figure 2 is a right side cross-sectional view of the spinning reel;
Figure 3 is an exploded perspective view of the rotor;
Figure 4 is a plan view of the first rotor arm; and
Figure 5 is a plan view of the second rotor arm.

### DETAILED DESCRIPTION OF THE PREFERRED EMBODIMENTS

Selected embodiments of the present invention will now be explained with reference to the drawings. It will be apparent to those skilled in the art from this disclosure that the following description of the embodiments of the present invention is provided for illustration only, and not for the purpose of limiting the invention as defined by the appended claims and their equivalents.

### Overall Configuration and Configuration of Reel Unit

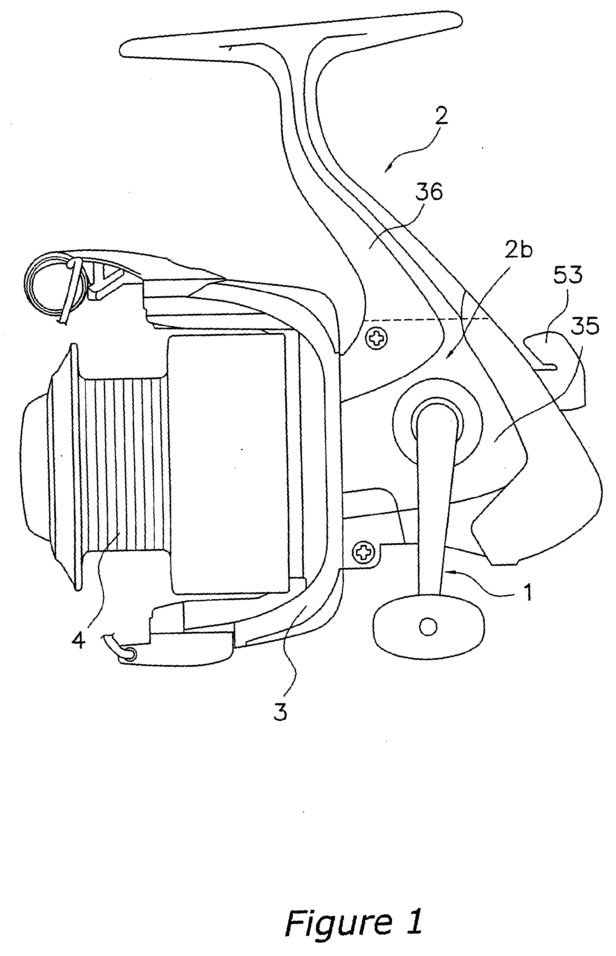

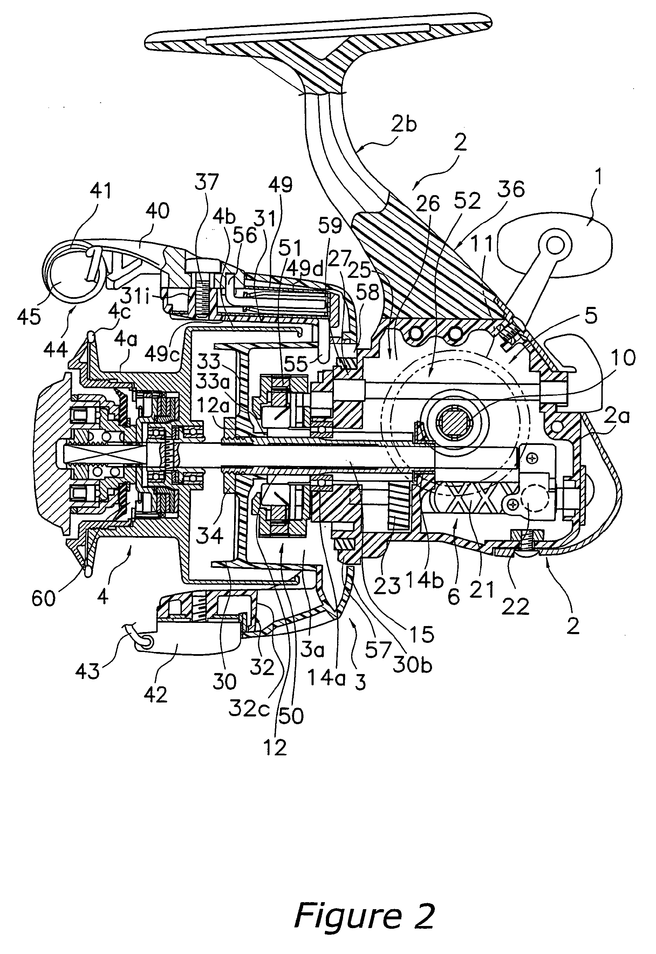

As shown in Figures 1 and 2, a spinning reel in accordance with an embodiment of the present invention includes a reel unit 2 that rotatably supports a handle 1 and which is mounted to a fishing rod, a rotor 3, and a spool 4. The rotor 3 is for winding fishing line around the spool 4, and is rotatively supported at the front of the reel unit 2. The spool 4 has fishing line wound around the outer peripheral surface thereof, and is disposed on the front of the rotor 3 such that the spool 4 can be reciprocated forward and backward. It should be noted that the handle 1 can be attached to the left side of the reel unit 2 as shown in Figure 1, or to the right side of the reel unit 2 as shown in Figure 2.

The reel unit 2 primarily includes a body member 2a for supporting the rotor 3 and the spool 4, and a lid member 2b detachably screwed to the body member 2a.

The body member 2a is, for example, made of a polyamide-based synthetic resin reinforced by glass fibers, and is produced by injection molding. The body member 2a has an aperture 25, and a mechanism accommodating space 26 is formed in the interior of the body member 2a. The mechanism accommodating space 26 is provided with a rotor drive mechanism 5 for rotating the rotor 3, an oscillating mechanism 6 for moving the spool 4 back and forth to uniformly wind the fishing line, and a power transmission mechanism (not shown in the figures) for transmitting the rotation of the handle 1 to the oscillating mechanism 6. An approximately circular rotation support portion 27 for rotatively supporting the rotor is formed on the front of the body member 2a.

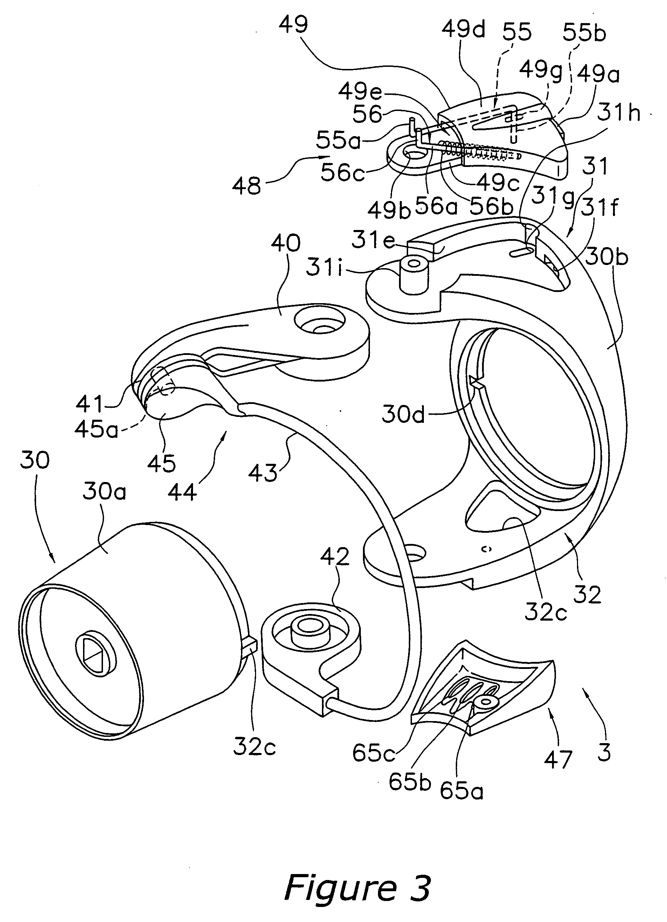

The lid member 2b is, for example, made of an aluminum alloy, and is, for example, produced by die casting. As shown in Figures 2 and 3, the lid member 2b includes a thin-walled cover portion 35 that covers the aperture 25 of the body member 2a, and a mounting leg portion 36 that extends upward from the cover portion 35.

### Configuration of the Rotor

As shown in Figures 2 and 3, the rotor 3 is formed from a synthetic resin, and includes a cylindrical portion 30, first and second rotor arms 31 and 32, a bail arm 44, a mounting member 49, and a cover member 47. The cylindrical portion 30 has a hollow portion 3a formed in the rear end of the cylindrical portion 30 and is rotatively mounted to one end of the reel unit 2. The first and second rotor arms 31 and 32 are disposed opposite to one another on the sides of the cylindrical portion 30. The bail arm 44 is pivotably mounted to the tips of the first rotor arm 31 and the second rotor arm 32, and guides fishing line to the spool 4. The mounting member 49 is detachably installed on the outer peripheral side of the first rotor arm 31. The cover member 47 covers the outer side of the second rotor arm 32.

The cylindrical portion 30 is disposed on the outer peripheral sides of the rotation support portion 27 of the body member 2a. As shown in Figures 2 and 3, the cylindrical portion 30 has a large diameter portion 30b and a tubular portion 30a. The large diameter portion 30b is arranged on the outer peripheral surface of a rear end portion of the cylindrical portion 30 and has a diameter that is larger than other portions of the cylindrical portion 30. The tubular portion 30a is detachably arranged on a front end portion of the large diameter portion 30b. The large diameter portion 30b is an annular member that is integrally formed with the first rotor arm 31 and the second rotor arm 32, and a plurality of engagement portions 30d are formed in the inner peripheral side of the large diameter portion 30b. As shown in Figure 3, the tubular portion 30a is positioned and locked by engaging a plurality of engagement projections 30c formed on the outer periphery of the rear end portion of the tubular portion 30a with the engagement holes 30d formed in the large diameter portion 30b. As shown in Figure 2, a front wall 33 is formed at the front portion of the cylindrical portion 30, and a boss 33a is formed in the center of the front wall 33. The front portion 12a of the pinion gear 12 and the spool shaft 15 pass through a hole in this boss 33a. A nut 34 is disposed at the front of the front wall 33, and this nut 34 is engaged with a male threaded portion formed at the front portion 12a of the pinion gear 12 and fastens the rotor 3 to the pinion gear 12.

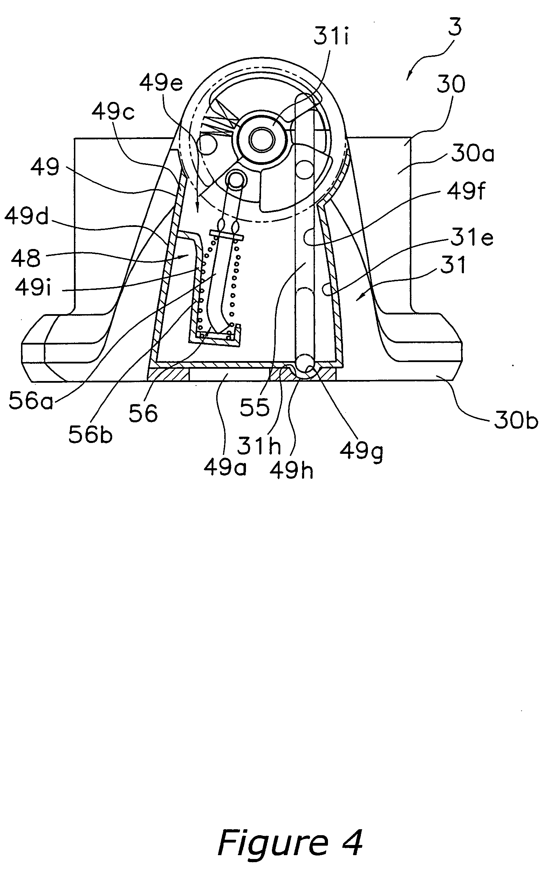

As shown in Figures 3 and 4, the first rotor arm 31 extends forward from the rear portion of the cylindrical portion 30 and is spaced apart from the cylindrical portion 30. As shown in Figure 3, the first rotor arm 31 is formed in smooth circumferential continuation with the large diameter portion 30b. As shown in Figures 3 and 4, a concave portion 31e is formed in a portion of the outer peripheral side of the first rotor arm 31. A mounting member 49 is detachably installed in the concave portion 31e, and a bail tripping mechanism 48 (described below) is mounted in the mounting member 49. A first bail support member 40 is pivotably mounted to the outer peripheral side of the tip of the first rotor arm 31.

As shown in Figures 3 and 4, the mounting member 49 has an outer periphery that is shaped to match the contour of the inner periphery of the concave portion 31e. The mounting member 49 includes a plate shaped member 49c and a case member 49d. The plate shaped member 49c is formed to match the contour of the inner periphery of the concave portion 31e. The case member 49d is formed such that the case member 49d covers the outer rear end portion of the plate shaped member 49c. The bail tripping mechanism 48 (described below) is mounted within the case member 49d.

As shown in Figures 3 and 4, the plate member 49c has a projecting portion 49a that projects from the rear end portion of the plate member 49c, and a through hole 49b that is formed in the front end portion of the plate member 49c. The projecting portion 49a is engaged with a groove portion 31f formed in a rear end surface of the concave portion 31e. The projecting portion 49a prevents floating when the mounting member 49 is mounted in the concave portion 31e. A boss portion 31i that is formed to project out from the upper portion of the concave portion 31e can be inserted into the through hole 49b. The mounting member 49 is fixedly mounted in the concave portion 31e by engaging the projecting portion 49a in the groove portion 31f and inserting the boss portion 31i into the through hole 49b. After the mounting member 49 is fixedly mounted to the concave portion 31e, the boss portion 31i is inserted into the first bail support member 40 (described below), and the first bail support member 40 and the mounting member 49 are fixedly coupled to the first rotor arm 31 by an attachment pin 37 described below (see Figure 2).

As shown in Figures 3 and 4, the case member 49d is formed such that the case member 49d covers the outer rear end portion of the plate member 49c. The case member 49d includes an aperture 49e in the upper side of the case member 49d. A moving member 55 and a toggle spring mechanism 56 (a bail tripping mechanism 48 described below) are mounted from the aperture 49e.

As shown in Figure 2, the first bail support member 40 is attached to the mounting member 49 and the first rotor arm 31 by an attachment pin 37 (see Figure 2) that is screwed into the first rotor arm 31. The attachment pin 37 is made of a bolt that includes a hexagonal hole with smooth edges, which makes it difficult for fishing line to become caught on the head of the attachment pin 37. A line roller 41 for guiding fishing line to the spool 4, and a fixed shaft cover 45 fixedly coupled to the first bail support member 40 are mounted to the tip of the first bail support member 40, with the line roller 41 being arranged between the first bail support member 40 and the fixed shaft cover 45. The line roller 41 is rotatively mounted to the tip of the first bail support member 40. The fixed shaft cover 45 is a deformed conical shape with a pointed tip, and a fixed shaft 45a (see Figure 3) for rotatively supporting the line roller 41 is integrally formed with the fixed shaft cover 45. A tip of the fixed shaft 45a is fixed to the first bail support member 40.

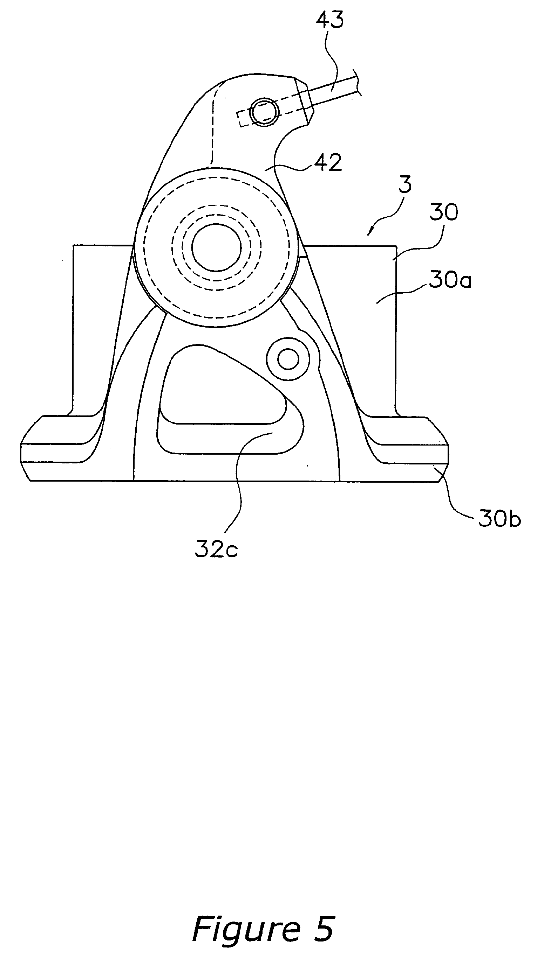

As shown in Figures 3 and 5, the second rotor arm 32 extends forward from the rear portion of the cylindrical portion 30 and is spaced apart from the cylindrical portion 30. The second rotor arm 32 is disposed in a position opposite the first rotor arm position 31. As shown in Figure 3, the second rotor arm 32 is formed in smooth circumferential continuation with the large diameter portion 30b. An approximately triangular aperture 32c is formed in the base of the second rotor arm 32. This aperture 32c is closed by a cover member 47 described below. In addition, a second bail support member 42 is pivotably mounted on the outer peripheral side of the tip of the second rotor arm 32.

As shown in Figure 3, a bail 43 made of a wire rod bent into an approximate U-shape is fixed between a tip of the fixed shaft cover 45 and the second bail support member 42. The first bail support member 40, the second bail support member 42, the line roller 41, the bail 43, and the fixed shaft cover 45 form a bail arm 44 that guides fishing line onto the spool 4. The bail arm 44 can pivot between a line-winding posture shown in Figure 2 and a line-releasing posture by flipping from the line-winding posture.

As shown in Figure 3, the cover member 47 is detachably mounted to the outer peripheral side of the second rotor arm 32 by a screw. The cover member 47 is shaped to cover the outer side of the second rotor arm 32 in the radial direction. Three oval through holes 65a, 65b and 65c are formed in the second cover member 47, and serve to expose a portion of the aperture 32c of the second arm portion 32b.

As shown in Figures 2 to 4, the bail tripping mechanism 48 includes the moving member 55, the toggle spring mechanism 56, and a switching projection 57. The tip end 55a of the moving member 55 is engaged with a bore (not shown in Figures) formed in the first bail support member 40, and moves forward and backward inside the first rotor arm 31. The toggle spring mechanism 56 toggles and biases the bail arm 44 into the line-releasing posture and the line-winding posture. The switching projection 57 (see Figure 2) is provided on the front surface of the rotation support portion 27 (see Figure 2).

As shown in Figures 3 and 4, the toggle spring mechanism 56 includes a guide shaft 56a and a tapered coil spring 56b disposed around the guide shaft 56a. A tip end 56c of the guide shaft 56a is engaged with a bore (not shown in Figures) formed on the first bail support member 40. As shown in Figure 4, the coil spring 56b is accommodated by a wall portion 49i erected in the interior of the case member 49d. The wall portion 49i has an approximate hook shape when viewed in cross-section. The toggle spring mechanism 56 toggles and biases the bail arm 44 into the line-releasing posture and the line-winding posture, and has a dead point interposed between these two postures. The dead point of the toggle spring mechanism 56 is set to be near the line-releasing posture.

The moving member 55 is a wire member having a tip end 55a and a base end 55b that are bent into opposite directions. As shown in Figure 4, the moving member 55 is guided by a guide groove 49f formed in a mounting member 49. The moving member 55 can be moved forward and backward, i.e., toward and away from the reel unit 2. As shown in Figure 4, a projecting portion 49h whose tip projects outward in a hemispherical shape is formed in the end portion of the guide groove 49f on the reel unit 2 side, and an elongated through hole 49g is formed in the projecting portion 49h. As shown in Figures 3 and 4, the projecting portion 49h is formed such that the exterior shape thereof matches a cut-out portion 31h. The cut-out portion 31h is cut into an approximate hemispherical shape from a portion of the rear end portion of the first rotor arm 31. In addition, an elongated through hole 31g is formed in the cut-out portion 31h, and the through hole 31g is connected with the through hole 49g. Here, the base end 55b of the moving member 55 is inserted into the through hole 49g and the through hole 31g, and comes into contact with the switching projection 57 (see Figure 2).

As shown in Figure 2, the switching projection 57 projects forward on the front portion of the rotation support portion 27, is formed to be inclined in the circumferential direction, and includes an inclined surface and a projecting end. When the handle 1 turns in the line-winding direction, the base portion of the moving member 55 that was moved backward when the bail arm 44 was pivoted into the line-releasing posture contacts the switching projection 57, and returns the bail arm 44 to the line-winding posture.

Since the bail tripping mechanism 48 is a well known component in the art, its structures will not be discussed or illustrated in further detail herein.

In addition, as shown in Figure 2, the rotor 3 is provided with a rotor braking mechanism 58 that uses the bail tripping mechanism 48 to brake the rotor 3. The rotor braking mechanism 58 is provided with the above-described moving member 55, and a braking member 59 made of rubber that contacts the base end surface of the moving member 55 when in the line-releasing posture. When the bail arm 44 is pivoted into the line-releasing posture, the moving member 55 moves backward and comes into contact with the braking member 59, thereby allowing the rotor braking mechanism 58 to brake the rotor 3. The braking member 59 is mounted to an annular groove provided in the rotation support portion 27. Since the rotor braking mechanism 58 is a well-known component in the art, its structures will not be discussed or illustrated in further detail herein.

As shown in Figure 2, a reverse rotation prevention mechanism 50 for preventing reverse rotation of the rotor 3 is disposed inside the hollow portion 3a. The reverse rotation prevention mechanism 50 has a roller-type one-way clutch 51, and a control mechanism 52 for switching the one-way clutch 51 between an operating state and a non-operating state. The one-way clutch 51 has an outer ring fixed to the body member 2a, and an inner ring non-rotatably mounted on the pinion gear 12. The control mechanism 52 has a control lever 53 disposed at the rear of the body member 2a, as shown in Figure 1. The one-way clutch 51 is switched between its two states by pivoting the control lever 53. The rotor 3 is prevented from rotating in the reverse direction when the one-way clutch 51 is in the operating state. But the rotor 3 is able to rotate in the reverse direction when the one-way clutch 51 is in the non-operating state. Since the reverse rotation prevention mechanism 50 is a well-known component in the art, its structures will not be discussed or illustrated in detail herein.

### Configuration Of The Spool

The spool 4 is disposed between the first rotor arm 31 and the second rotor arm 32 of the rotor 3, and is fixedly coupled to the tip of the spool shaft 15 via a drag mechanism 60. The spool 4 is a member made of, for example, an aluminum alloy, and includes a bobbin trunk portion 4a onto the outer periphery of which fishing line is wound, a skirt portion 4b integrally formed with the rear of the bobbin trunk portion 4a, and a front flange portion 4c fixedly attached to the front of the bobbin trunk portion 4a. The bobbin trunk portion 4a is a cylindrical member that extends to the outer peripheral sides of the cylindrical portion 30 of the rotor 3. Since the drag mechanism 60 is a well known component in the art, its structures will not be discussed or illustrated in detail herein.

### Configuration Of The Rotor Drive Mechanism

As shown in Figure 2, the rotor drive mechanism 5 includes a main gear shaft 10, a main gear 11 and the pinion gear 12. The main gear shaft 10 is mounted non-rotatively to the handle 1, the main gear 11 rotates together with the main gear shaft 10, and the pinion gear 12 meshes with the main gear 11. The pinion gear 12 is a tubular member that rotates when the handle 1 is turned, and the spool shaft 15 extends through the interior of the pinion gear 12 from front to rear. The pinion gear 12 is a hollow tubular member made of metal, and the spool shaft 15 passes through the interior of the pinion gear 12. The middle and rear portions of the pinion gear 12 are rotatively supported on the body member 2a via bearings 14a and 14b. The rotor 3 is non-rotatively mounted to the front portion 12a of the pinion gear 12. The bearing 14a on the front side is a ball bearing mounted in the interior of the rotation support portion 27. The bearing 14b on the rear side is a brimmed bushing. Since the rotor drive mechanism 5 is a well-known component in the art, its structures will not be discussed or illustrated in further detail herein.

### Configuration Of The Oscillating Mechanism

The oscillating mechanism 6 reciprocates the spool 4 forward and backward via the spool shaft 15 in cooperation with the rotation of the handle 1. The rotation of the handle 1 is transmitted to the oscillating mechanism 6 via a power transmission mechanism, which transmits rotation of the handle 1 to the oscillating mechanism 6 through the main gear 11, the pinion gear 12, and a driven gear 23. As shown in Figure 2, the oscillating mechanism 6 includes a threaded shaft 21 disposed parallel to the spool shaft 15, a slider 22 that reciprocates forward and backward along the threaded shaft 21 as the threaded shaft 21 rotates, and the driven gear 23 mounted to the front end side of the threaded shaft 21. The speed of the rotation of the pinion gear 12 is reduced and transmitted to the driven gear 23 via the power transmission mechanism. The spool shaft 15 is non-rotatively attached to the slider 22. In this manner, the slider 22 moves forward and backward with the rotation of the handle 1 and reciprocates the spool 4 forward and backward. The power transmission mechanism is a conventional component that is well known in the art. Accordingly, the structure of the power transmission mechanism will not be discussed or illustrated in detail herein. Since the oscillating mechanism 6 is a well known component in the art, its structures will not be discussed or illustrated in further detail herein.

### Operation And Function Of The Reel

To cast with this spinning reel, the bail arm 44 is pushed over from the line-winding posture to the line-releasing posture. Then, the fishing rod is swung and the tackle is cast out. When this occurs, fishing line is released in a helical fashion from the front of the spool 4.
□ When the fishing line is to be retrieved, the bail arm 44 is pushed over into the line-winding posture. This occurs automatically by the function of the bail tripping mechanism 48 when the handle 1 is rotated in the line-winding direction. When the handle 1 is rotated in the line-winding direction, the rotational force is transmitted to the pinion gear 12 via the main gear shaft 10 and the main gear 11. The rotational force transmitted to the pinion gear 12 is transmitted to the rotor 3 via the front portion 12a of the pinion gear 12, and the rotor 3 is rotated in the line-winding direction.

On the other hand, the threaded shaft 21 rotates through the driven gear 23, which meshes with the pinion gear 12 via the power transmission mechanism. Then, the slider 22 that meshes with the threaded shaft 21 is reciprocated forward and backward by the rotation of the threaded shaft 21. The fishing line guided onto the spool 4 by the bail arm 44 is wound onto the bobbin trunk portion 4a of the spool 4, and the fishing line is wound onto the spool 4.

In this rotor 3, the mounting member 49 is detachably installed in the first rotor arm 31, and the bail tripping mechanism 48 is mounted on the mounting member 49. Here, by attaching the bail tripping device 48 in advance in the mounting member 49 and unitizing the bail tripping device 48, the mounting member 49 having the unitized common bail tripping device 48 can be attached to reels whose rotors 3 are of different sizes.

### Other Embodiments

(a) The foregoing embodiment was described using a front-drag type spinning reel as an illustrative example. However, the present invention can also be applied to the rotor of rear-drag type spinning reels and lever brake type spinning reels.
(b) In the foregoing embodiment, the tubular member 30a was detachably arranged on the large diameter portion 30b. However, the tubular member 30a and the large diameter portion 30b may be arranged such that they form a unitary integral member.
(c) In the foregoing embodiment, the mounting member 49 was installed on the outer peripheral side of the first rotor arm 31. However, the mounting member 49 may be configured so as to be installed on the inner peripheral side of the first rotor arm 31.

According to the present invention, because a mounting member in which a bail tripping device is mounted is detachably installed on one side of a rotor arm of a rotor of a spinning reel, the bail tripping device can be standardized and attached to a rotor arm regardless of the size of the rotor.

As used herein, the following directional terms "forward, rearward, above, downward, vertical, horizontal, below and transverse" as well as any other similar directional terms refer to those directions of a device equipped with the present invention. Accordingly, these terms, as utilized to describe the present invention should be interpreted relative to a device equipped with the present invention.

The terms of degree such as "substantially", "about" and "approximately" as used herein mean a reasonable amount of deviation of the modified term such that the end result is not significantly changed. These terms should be construed as including a deviation of at least ± 5% of the modified term if this deviation would not negate the meaning of the word it modifies.

This application claims priority to Japanese Patent Application No. 2002-316155. The entire disclosure of Japanese Patent Application No. 2002-316155 is hereby incorporated herein by reference.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing description of the embodiments according to the present invention are provided for illustration only, and not for the purpose of limiting the invention as defined by the appended claims and their equivalents.

## Claims

1. A rotor (3) for a spinning reel of the type having a reel unit (2) and a spool(4), said rotor being rotatively mountable to the reel unit for guiding and winding fishing line around the spool, said rotor comprising:
a rotor unit having a cylindrical portion (30) that is rotatively mounted to the reel unit, and a pair of rotor arms (31, 32) that each extend forward from opposing positions on an outer peripheral surface of a rear end portion of said cylindrical portion, said rotor arms extending so as to be spaced apart from said cylindrical portion;
a bail arm (44) for guiding fishing line onto the spool, said bail arm being mounted on tips of said pair of rotor arms so as to be pivotable between a line-winding posture and a line-releasing posture;
a mounting member (49) that is detachably installed on one of said pair of rotor arms; and
a bail tripping device (48) that is arranged on said mounting member, said bail tripping device returning said bail arm to the line-winding posture from the line-releasing posture in response to rotation of said rotor unit in a line-winding direction.

2. The rotor for a spinning reel as set forth in Claim 1, wherein said mounting member (49) is arranged on an outer peripheral side of said one of said pair of rotor arms (31, 32).

3. The rotor for a spinning reel as set forth in Claim 1, wherein said mounting member (49) is arranged on an inner peripheral side of said one of said pair of rotor arms (31, 32).

4. The rotor for a spinning reel as set forth in any of Claims 1 to 3, wherein said cylindrical portion (30) has a large diameter portion (30b) and a tubular portion (30a) that is detachably arranged on a front end portion of said large diameter portion.

5. The rotor for a spinning reel as set forth in any of Claims 1 to 4, wherein said bail tripping device includes:
a moving member having a tip portion that is detachably engaged with said one of said pair of bail arms (44), and a base portion that is detachably engaged with said mounting member (49) such that, in response to pivoting of the bail arm, said base portion of said moving member is movable at least forward and backward between a first position which corresponds to the line-winding posture and a second position which corresponds to the line-releasing posture and is closer to the reel unit than said first position;
a toggle spring mechanism having a tip portion that is rotatively engaged with one of said pair of bail arms at a position that is different from a position at which said moving member is engaged with said bail arm, such that said toggle spring mechanism toggles and biases said bail arm into one of said line-winding posture and the line-releasing posture, depending on in which direction said bail arm is pivoted; and
a switching portion arranged on a front portion of said reel unit, such that when said rotor arm rotates in the line-winding direction, said switching portion comes into contact with said base portion of said moving member that is in the second position to move said moving member toward the first position.

6. The rotor for a spinning reel as set forth in any of Claims 1 to 5, wherein one of said pair of rotor arms (31, 32) has a concave portion formed thereon, and an outer periphery of said mounting member (49) is shaped to match a contour of said concave portion, such that said mounting member is detachably installed on said concave portion.

7. The rotor for a spinning reel as set forth in any of Claims 1 to 6, wherein said mounting member (49) has a plate shaped member and a case member, said case member is formed to cover an outer rear end portion of said plate shaped member,
and said bail tripping mechanism (48) is mounted within said case member.

8. The rotor for a spinning reel as set forth in Claim 6, wherein said mounting member (49) has a plate shaped member and a case member, said plate shaped member is formed to match a contour of said concave portion; and said bail tripping mechanism (48) is mounted within said case member.

9. The rotor for a spinning reel as set forth in Claim 5, wherein said rotor arm has a through hole formed thereon, and said base portion of said moving member is inserted through said through hole.

10. The rotor for a spinning reel as set forth in Claim 5, wherein said mounting member (49) has a through hole formed thereon, and said base portion of said moving member is inserted through said through hole..

11. The rotor for a spinning reel as set forth in Claim 6, wherein said mounting member has a projecting portion,
said concave portion has a groove portion, such that said projecting portion is engaged with said groove portion and prevents floating when said mounting member is mounted in said concave portion.

12. A spinning reel comprising:
a handle (1);
a reel unit (2) rotatably supporting said handle;
a spool (4);
a rotor (3) according to any of Claims 1-11, said rotor being rotatively mounted between said reel unit and said spool for guiding and winding fishing line around said spool.
